# EUROPÄISCHE PATENTSCHRIFT

(11) **EP 0 657 953 B1**
(45) Veröffentlichungstag und Bekanntmachung des Hinweises auf die Patenterteilung: **12.03.1997**
(21) Anmeldenummer: 94115950.1
(22) Anmeldetag: 10.10.1994
(51) Int. Cl.: H01M 10/40, H01M 4/02

(54) **Elektrochemisches Sekundärelement**
Electrochemical secondary battery
Accumulateur

(30) Priorität: 09.12.1993 DE 4342039
(43) Veröffentlichungstag der Anmeldung: 14.06.1995
(73) Patentinhaber: VARTA Batterie Aktiengesellschaft, 30419 Hannover (DE)
(72) Erfinder: Krämer, Peter, D-61462 Königstein (DE); Mengel, Frank, D-35085 Ebersdorfergrund (DE); Hake, Martin G., Dr., D-65510 Idstein-Eschenhahn (DE)
(74) Vertreter: Kaiser, Dieter Ralf, Dipl.-Ing.

(56) Entgegenhaltungen:
- EP-A- 0 563 988
- EP-A- 0 627 776

## Beschreibung

Die Erfindung betrifft ein elektrochemisches Sekundärelement mit mindestens einer positiven Elektrode, deren aktives Material eine lithiumintercalierende Chalkogenverbindung eines Übergangsmetalls umfaßt, mindestens einer negativen Elektrode, deren aktives Material ein lithiumintercalierendes Kohleprodukt umfaßt, und einem nichtwässrigen Elektrolyten in einem geschlossenen Gehäuse.

Bekanntlich sind der Anwendung von Lithium-Metallelektroden in wiederaufladbaren Zellen wegen der Neigung des Lithiums zur Dendritenbildung und zum Abschlammen enge Grenzen gesetzt. Die Zyklisierfähigkeit von Lithium-Zellen konnte jedoch durch die Auffindung elektronenleitender Gerüstsubstanzen, die sich im Lade-/ Entladebetrieb wechselseitig mit Lithiumionen als der eigentlichen elektrochemisch aktiven lonenspezies beladen und ebenso von diesen wieder entleeren lassen, außerordentlich verbessert werden (vgl. z.B. US PS 4 828 834).

In Anspielung an den Schaukelrhythmus, in dem das Lithium zwischen dem Wirtsgitter der einen Elektrodenpolarität und dem Wirtsgitter der anderen Elektrodenpolarität hin und herwechselt, werden diese neuartigen reversiblen Batteriesysteme unter Fachleuten auch als SWING-Systeme bezeichnet. In der englichsprachigen Fachliteratur findet man die Bezeichnung "rocking chair cells", auch Li-Ion cells.

Nach dem SWING-Konzept arbeitende Lithium-Sekundärzellen weisen als lithiumintercalierende Gerüstsubstanz der positiven Elektrode meist einen Lithium-Manganspinell, LiMn₂O₄, oder ein lithiiertes Übergangsmetalloxid wie LiCoO₂ oder LiNiO₂ auf. Bei dem Manganspinell kann ein Teil des Mangans zum Zweck der Stabilisierung des Spinellgitters durch andere Übergangsmetalle, z.B. Co und Ni, substituiert sein. Die Gerüstsubstanz der negativen Elektrode ist im allgemeinen "Nadelkoks", ein durch einen hinhaltenden Verkokungsprozeß aus organischem Material erzeugtes und unregelmäßig kristallisiertes Kohleprodukt, oder Graphit.

Elektroden für SWING-Zellen mit Flüssigelektrolyten haben bereits einen hohen technischen Reifegrad erlangt, weil sie mit Verfahren hergestellt werden, die Parallelen in anderen Industriezweigen besitzen. Gemäß EP-PS 205 856 lassen sich Dünnschichtelektroden von nur 100µm Gesamtdicke herstellen, indem man Gerüstsubstanzen der oben genannten Art in fein gepulverter Form, gegebenenfalls mit einem Leitmittel vermischt, mit einer Lösung eines Klebers in einem organischen Lösungsmittel anteigt und die erhaltene Masse mittels Rakel auf Folien aus Aluminium bzw. Kupfer aufstreicht.

Der geeignete Zellentyp für den Einsatz der Dünnschichtelektroden ist naturgemäß die Rund- oder Wickelzelle. Die ungünstige Raumökonomie der Rundzelle und die mit ihrer Größe wachsende Problematik der Wärmeabführung macht sie jedoch auf einem sehr zukunftsorientierten Batterieanwendungsgebiet, nämlich dem der Elektro-straßenfahrzeuge, der prismatischen Zelle unterlegen.

Andererseits würde die Beschickung prismatischer Zellgehäuse mit den bekannten Dünnschichtelektroden in diesem Falle keine Abhilfe bringen, da viele dünne Elektroden als größeres Sandwich-Pack einen hohen Separationsaufwand zu Lasten der Energiedichte erfordem würden und schlecht handhabbar sind.

Dicke Rakelelektroden mit mehr als 200µm Gesamtdicke sind nicht realisierbar, weil bei größeren Schichtdicken Haftungsprobleme an der Trägerfolie auftreten. Eine Erhöhung der Energiedichte durch Erniedrigung der Porosität (<30%) ist bei Rakelelektroden nicht erreichbar, da es durch zu starkes Walzen zu einer Deformation der Elektroden kommt.

Der Erfindung liegt die Aufgabe zugrunde, ein nach dem SWING-Prinzip arbeitendes elektrochemisches Sekundärelement mit einer lithiumintercalierenden Manganspinell-Kathode und einer lithiumintercalierenden Kohleanode anzugeben, dessen Elektroden in solcher Weise ausgeführt sind, daß sie mit niedrigem Ableiter- und Separatoranteil, bezogen auf die aktive Masse, eine hohe Energiedichte erwarten lassen, einfach zu fertigen sind und sich bevorzugt für die Bestückung prismatischer Zellen eignen.

Die Aufgabe wird erfindungsgemäß mit einem Sekundärelement gelöst, wie es durch Anspruch 1 definiert ist.

Danach beruht die neue Zelle auf der Kombination zweier Elektroden, die unterschiedlichen Elektroden-Techniken entstammen und sich dadurch in sehr günstiger Weise ergänzen.

Der positiven Elektrode liegt eine Walztechnik zugrunde, bei der ein trockenes Gemisch aus dem intercalationsfähigen Gerüstmaterial, hier LiMn₂O₄, Polytetrafluorethylen als Binder sowie Ruß als Leitmittel in ein feinmaschiges Metallnetz beidseitig eingewalzt wird. Das Metallnetz ist ein Aluminiumnetz mit vorzugsweise einer Aluminium-Ableiterfahne. Das Flächengewicht der fertigen Walzelektrode beträgt 126mg/cm². Die Ableiterfahne ist an einen Aluminium- oder Titan-Polbolzen angeschlossen. Die negative Elektrode besitzt zur Aufnahme eines lithiumintercalierenden Graphits ein hochporöses Nickelschaumgerüst.

Die Herstellungstechnik derartiger Metallschäume als elektronenleitende Elektrodenträger ist verhältnismäßig neu. Nach einem meistgeübten Verfahren wird ein Kunststoff verschäumt und in diesem Zustand mit einem Metall plattiert. Nach Entfernung des Kunststoffs durch thermische Zersetzung wird das verbliebene schwammähnliche Metallgerüst einer Glühbehandlung unterzogen. Es ist aber auch möglich, ein Gemisch aus dem gepulverten Metall und einem Porenbildner zu sintern und den Porenbildner anschließend herauszulösen. Nach einer weiteren Methode läßt sich ein Metallschaumgerüst durch Einblasen eines Gases in eine Metallschmelze und Abkühlen derselben mit den darin erzeugten Poren erhalten.

In das Nickelschaumgerüst wird nun erfindungsgemäß der Anoden-Graphit als Suspension in Wasser eingeschlämmt oder einpastiert. Eine Ableiterfahne des Nickelschaums besteht aus Stahlblech. Sie ist angeschlossen an einen Polbolzen aus z. B. vernickeltem Kupfer. Ein Vorteil des Metallschaumträgers liegt darin, daß durch Nachwalzen der pastierten Elektrode bestimmte Porositäten eingestellt werden können.

Andererseits kann der leere Nickelschaum auf bestimmte Dicken vorgewalzt werden, um entsprechende Mengen aktiven Anoden-Graphits in sich aufzunehmen. Man hat auf diese Weise, da das Flächengewicht der positiven Walzelektrode nicht variiert werden kann, über die negative Elektrode eine Handhabe, um die notwendige Balancierung der Zelle, d.h. die gegenseitige Abstimmung der Elektrodenkapazitäten derart, daß im geladenen Zustand der Zelle die negative Elektrode vollständig lithiiert ist, vorzunehmen.

Besonders günstige Zusammensetzungen von Aktivmassen für die erfindungsgemäße Kombination von positiver Walzelektrode und negativer Metallschaumelektrode sind folgende:

### Positive Walzelektrode

Zu 100 Gewichtsteilen LiMn₂O₄ werden hinzugefügt

| | | | |
|---|---|---|---|
| PTFE (Gewichtsteile) | 3 bis 9 | vorzugsweise | ca. 6,6 |
| Ruß (Gewichtsteile) | 3,3 bis 6,6 | vozugsweise | ca. 4,4 |

Die Bestandteile der positiven Masse werden trocken vermischt und in ein Aluminiumnetz eingewalzt.

### Negative Graphit- in - Nickelschaum - Elektrode

Für einen Ansatz werden pro 100 Gewichtsteile Graphit (Qualität Lonza KS6, Komgröße von über 90% des Materials <6µm) folgende Chemikalien als Zusätze benötigt:

| | | | |
|---|---|---|---|
| Benetzungsmittel (Gewichtsteile) | 0,3 bis 1,5 | vozugsweise | ca. 0,6 |
| Pigmentverteiler (Gewichtsteile) | 1,8 bis 3,6 | vozugsweise | ca. 2,4 |
| Bindemittel (Gewichtsteile) | 3,6 bis 6,6 | vorzugsweise | ca. 5,1 |
| Dispergiermittel (Gewichtsteile) | 0,6 bis 1,5 | vorzugsweise | ca. 1,1 |
| Weichmacher (Gewichtsteile) | 0,6 bis 1,5 | vozugsweise | ca. 1,1 |

Diese Bestandteile der negativen Masse werden in der angegebenen Reihenfolge, zuletzt der Graphit, unter beständigem Rühren in destilliertes Wasser eingetragen. Die Wassermenge ist so groß zu wählen, daß eine Aufschlämmung von streichfähiger Konsistenz entsteht. Im allgemeinen sind für 100 Gewichtsteile Graphit ca. 190 Gewichtsteile Wasser ausreichend.

Für die angeführten Zusätze eignen sich insbesondere die folgenden Substanzen:
Als Benetzungsmittel: 20%ige wässr. Lösung eines Alkylpolyethylenglykolethers.
Als Pigmentverteiler: 10%ige wässr. Lösung von Natriumpolyacrylat.
Als Bindemittel: 50%ige wässr. Dispersion eines Styrol-Acrylsäureester-Copolymerisats.
Als Dispergiermittel: Ligninsulfit (Vanisperse CB, Borregaard Ind. Ltd., Sarpsborg, Norwegen).
Als Weichmacher: Polypropylenglykol-alkylphenylether.

Der weitere Ablauf bei der Fertigung der negativen Elektrode sieht eine Bevorratung der Naßmischung in einem Behälter vor, von dem aus sie kontinuierlich mittels einer Pumpe einer Pastieranlage zugeführt und dort in ein laufendes Endlosband aus Nickelschaum eingestrichen wird. Das mit der Naßmischung gefüllte Metallschaumband passiert anschließend eine Trockenzone und wird auf eine Vorratsrolle aufgespult, während bei der Pastierung abgestreifte Masseüberstände gesammelt und über eine Rückleitung mittels einer weiteren Pumpe dem Vorratsbehälter erneut zugeführt werden.

Ein großer Vorteil des für die erfindungsgemäße Elektrode verwendeten Metallschaumträgergerüstes besteht darin, daß es durch Vorwalzen mittels Kalander auf eine bestimmte Flächenkapazität eingestellt werden kann. Das vorgewalzte Gerüstmaterial nimmt dann beim Pastieren Aktivmasse erschöpfend in seinen Poren auf.

Bei der nachfolgenden Trocknung hinterläßt jedoch das verdampfende Wasser ein beträchtliches freies Porenvolumen, während die Poren nur noch zu etwa 30% von der trockenen Masse ausgefüllt sind. Dies würde eine starke Einschränkung der Energiedichte bedeuten. Um diese anzuheben, ist eine Neueinstellung der Porosität durch Nachwalzen erforderlich. Eine optimale Energiedichte und Belastbarkeit wird bei einer Porosität von ca. 50 - 60% erreicht.

Dank der erfindungsgemäßen Kombination einer positiven Walzelektrode mit einer negativen Metallschaumelektrode, beide vom Li-Intercalationstyp, werden Elektroden für den Bau von Sekundärzellen nach dem SWING-Konzept verfügbar, welche um ein 3 bis 4-faches dicker sind als die nach der Rakel-Technik hergestellten und in Wickelzellen eingesetzten Dünnschichtelektroden. Damit ist es möglich, auch große prismatische SWING-Zellen mit einer weit höheren Kapazität und wesentlich günstigeren volumetrischen Energiedichten zu bauen, als dies die Bestückung mit den bekannten Dünnschichtelektroden erlauben würde.

So beträgt die Dicke erfindungsgemäßer positiver Lithium-Manganspinell-Walzelektroden ca. 500µm (Dünnschicht-Rakelelektroden maximal 200µm bei einseitiger Folienbeschichtung), ihr Flächengewicht, bezogen auf die aktive Masse, ca. 126mg/cm² und ihre Porosität ca. 15%.

Bei einer erfindungsgemäßen Metallschaum-Elektrode beträgt die Dicke nach dem Pastieren, je nach Dicke des vorgewalzten Nickelschaums, zwischen 700 und 1100µm. Das Flächengewicht, bezogen auf die aktive Masse, liegt bei 22 bis 40mg/cm², die Porosität zwischen 81 und 84%. Durch Nachwalzen wird eine Porosität von 50 bis 60% eingestellt, wobei die endgültige Elektrodendicke 300 bis 500µm erreicht.

Auch der Kapazitätsvergleich zwischen einer Graphit-Metallschaum-Elektrode und einer Graphit-Rakel-Elektrode fällt eindeutig zugunsten der ersteren aus: Belastet man eine 815µm dicke Nickelschaumelektrode mit dem Flächengewicht 28,5mg/cm² (nur negative Masse einschließlich Additive) und eine 130µm dicke Rakel-Elektrode mit dem Flächengewicht 9,2mg/cm² (nur negative Masse) jeweils mit einem Strom von 2,0mA/cm² (die Schaumelektrode beidseitig), so findet man praktisch gleiche spezifische Kapazitäten von 299mAh/g bzw. 295mAh/g, beide Zahlen bezogen jeweils auf die gesamte negative Masse. Wegen der 3-fach größeren Masse pro Flächeneinheit besitzt die Schaumelektrode jedoch eine 3-fach größere Flächenkapazität.

Zu Testzwecken wurde eine prismatische SWING-Zelle mit erfindungsgemäßer Elektrodenkombination gebaut. Von den nachstehenden Tabellen gibt Tab.1 eine Übersicht über die Dimensionierung und Bestückung der Zelle, Tab.2 unterrichtet über die Ergebnisse einer Zyklenbehandlung.

**Tabelle 1**

| Elektrodenabmessungen: 7 cm x 9,4 cm | | |
|---|---|---|
| | Positive Elektrode | Negative Elektrode |
| Anzahl | 18 | 19 |
| Elektrodendicke | ca. 500µm | ca. 810µm |
| Flächengewicht | ca. 126mg/cm² | ca. 28mg/cm² |
| Elektrodenmasse | ca. 149g | ca. 35g |
| Separator: | Polypropylen, 50µm, 45% Porosität | |

**Tabelle 2**

| Ladeströme: 2,4 bis 0,6A | | | | |
|---|---|---|---|---|
| Entladeströme: 1,2A | | | | |
| Zyklus Nr. | Ladeschlußspannung [V] | Lade-Kapazität [Ah] | Entladeschlußspannung [V] | Entlade-Kapazität [Ah] |
| 1 | 4,2 | 16,8 | 3,0 | 11,1 |
| 4 | 4,25 | 11,7 | 3,0 | 11,5 |
| 6 | 4,25 | 11,8 | 3,0 | 11,1 |
| 8 | 4,25 | 14,4 | 3,0 | 11,0 |

## Patentansprüche

1. Elektrochemisches Sekundärelement, welches
mindestens eine positive Elektrode, deren aktives Material eine lithiumintercalierende Chalkogenverbindung eines Übergangsmetalls umfaßt,
mindestens eine negative Elektrode, deren aktives Material ein lithiumintercalierendes Kohleprodukt umfaßt, und
einen nichtwässerigen Elektrolyten in einem geschlossenen Gehäuse besitzt, wobei die positive Elektrode durch Aufwalzen eines kunststoffgebundenen Lithium-Manganspinells LiMn₂O₄ auf ein Aluminiumnetz als Trägergerüst und die negative Elektrode durch Imprägnieren eines Metallschaumträgergerüstes hoher Porosität mit einer Graphit-Paste hergestellt werden.

2. Elektrochemisches Sekundärelement nach Anspruch 1, bei dem die Gerüststruktur der negativen Elektrode von einem Nickelschaum gebildet ist.

3. Elektrochemisches Sekundärelement nach Anspruch 1 oder 2, bei dem die Graphit-Paste durch Mischen von Graphitpulver mit einer wässrigen Bindemittel-Dispersion gebildet ist.

4. Elektrochemisches Sekundärelement nach einem der Ansprüche 1 bis 3, bei dem die Graphit-Paste zusätzlich zum Bindemittel Weichmacher und/oder Dispergiermittel enthält.

5. Elektrochemisches Sekundärelement nach einem der Ansprüche 1 bis 4, bei dem dem Lithium-Manganspinell neben Polytetrafluorethylen (PTFE) als Bindemittel zusätzlich Ruß als Leitmittel beigemischt ist.

6. Elektrochemisches Sekundärelement nach Anspruch 5, bei dem auf 100 Gewichtsteile LiMn₂O₄ 3 bis 9 Gewichtsteile, vorzugsweise ca. 6,6 Gewichtsteile PTFE und 3,3 bis 6,6 Gewichtsteile, vorzugsweise ca. 4,4 Gewichtsteile Ruß entfallen.

7. Elektrochemisches Sekundärelement nach einem der Ansprüche 1 bis 6, bei dem das Zellengehäuse von prismatischer Form ist.

## Claims

1. Electrochemical secondary cell which has in a sealed housing at least one positive electrode whereof the active material includes a lithium-intercalating chalcogen compound of a transition metal,
at least one negative electrode whereof the active material includes a lithium-intercalating carbon product and
a non-aqueous electrolyte, with the positive electrode being produced by rolling a plastic-bound lithium manganese spinel LiMn₂O₄ onto an aluminium mesh as the support skeleton, and the negative electrode being produced by impregnating with a graphite paste a metal foam support skeleton of high porosity.

2. Electrochemical secondary cell according to Claim 1, in which the skeletal structure of the negative electrode is formed of a nickel foam.

3. Electrochemical secondary cell according to Claim 1 or 2, in which the graphite paste is formed by mixing graphite powder with an aqueous binder dispersion.

4. Electrochemical secondary cell according to one of Claims 1 to 3, in which the graphite paste contains plasticiser and/or dispersing agent in addition to the binder.

5. Electrochemical secondary cell according to one of Claims 1 to 4, in which carbon black is admixed as a conducting agent to the lithium manganese spinel in addition to polytetrafluoroethylene (PTFE) as the binder.

6. Electrochemical secondary cell according to Claim 5, in which there are 3 to 9 parts by weight, preferably approximately 6.6 parts by weight, PTFE and 3.3 to 6.6 parts by weight, preferably approximately 4.4 parts by weight, carbon black per 100 parts by weight LiMn₂O₄.

7. Electrochemical secondary cell according to one of Claims 1 to 6, in which the cell housing is of prismatic form.

## Revendications

1. Elément secondaire électrochimique comprenant :
- au moins une électrode positive dont le matériau actif est une liaison calcogène à intercalage de lithium d'un métal de transition,
- au moins une électrode négative dont le matériau actif est un produit charbonneux à intercalage de lithium,
et un électrolyte non aqueux dans un boîtier fermé, l'électrode positive étant réalisée par laminage d'un spinelle lithium-manganèse relié par un matériau synthétique LiMn₂O₄ sur une grille d'aluminium en tant qu'ossature de support et une électrode négative réalisée par imprégnation d'une ossature à mousse de métal haute porosité avec une pâte de graphite.

2. Elément secondaire électrochimique selon la revendication 1,
dans lequel la structure de l'ossature de l'électrode négative est constituée d'une mousse de nickel.

3. Elément secondaire électrochimique selon la revendication 1 ou 2,
dans lequel la pâte de graphite est constituée par le mélange de poudre de graphite avec une dispersion aqueuse de liant.

4. Elément secondaire électrochimique selon l'une des revendications 1 à 3,
dans lequel la pâte graphite contient, en plus du liant, un assouplisseur et/ou un agent de dispersion.

5. Elément secondaire électrochimique selon l'une des revendications 1 à 4,
dans lequel le spinelle de manganèse contient en plus du polytétrafluoréthylène (PTFE) en tant que liant, du noir de fumés comme agent de conducteur.

6. Elément secondaire électrochimique selon la revendication 5,
dans lequel pour 100 parties pondérales de LiMn₂O₄ on a une portion de 3 à 9, de 6,6 de PTFE et de 3,3 à 6,6, de préférence approximativement 4,4 de noir de fumée.

7. Elément secondaire électrochimique selon l'une des revendications 1 à 6,
dans lequel le boîtier de cellule est en forme de prisme.
